(19) Europäisches Patentamt
European Patent Office
Office européen des brevets

(11) Veröffentlichungsnummer: **0 367 034 B1**

(12) # EUROPÄISCHE PATENTSCHRIFT

(45) Veröffentlichungstag der Patentschrift: **18.05.94**

(51) Int. Cl.$^5$: **B60Q 1/52**, B66F 17/00

(21) Anmeldenummer: **89119432.6**

(22) Anmeldetag: **19.10.89**

(54) **Gefahrenmeldeanlage für ein Fahrzeug, insbesondere ein Flurförderzeug.**

(30) Priorität: **31.10.88 DE 3837054**

(43) Veröffentlichungstag der Anmeldung:
**09.05.90 Patentblatt 90/19**

(45) Bekanntmachung des Hinweises auf die Patenterteilung:
**18.05.94 Patentblatt 94/20**

(84) Benannte Vertragsstaaten:
**AT BE CH FR GB LI NL SE**

(56) Entgegenhaltungen:
**DE-A- 3 501 598**
**US-A- 4 626 849**

(73) Patentinhaber: **MARINITSCH, Waldemar**
**Putzbrunner Strasse 43**
**D-81739 München(DE)**

(72) Erfinder: **MARINITSCH, Waldemar**
**Putzbrunner Strasse 43**
**D-81739 München(DE)**

(74) Vertreter: **WILHELMS, KILIAN & PARTNER Patentanwälte**
**Eduard-Schmid-Strasse 2**
**D-81541 München (DE)**

EP 0 367 034 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Gefahrenmeldeanlage für ein Fahrzeug insbesondere ein Flurförderzeug mit wenigstens einem Sensor, der das Auftauchen eines Gegenstandes oder einer Person in einem bestimmten Bereich erfaßt und ein entsprechendes Alarmsignal erzeugt, das an Schaltsteuereinrichtungen für den Betrieb des Fahrzeuges oder an Alarmeinrichtungen für den Fahrer des Fahrzeuges liegt.

Eine derartige aus der DE-A-3 501 598 bekannte Gefahrenmeldeanlage wird beispielsweise bei Gabelstaplern, Flurförderzeugen, schienengeführten Krananlagen usw. vorgesehen, die in geschlossenen Räumen beispielsweise zwischen Hochregalfluren arbeiten. Insbesondere bei derartigen Hochregallagern bestehen große Gefahren, daß Personen durch ein heranfahrendes Fahrzeug oder Förderzeug gefährdet werden, da der erförderliche Freiraum nicht vorhanden ist, in den sich diese Personen vor der Gefahr rechtzeitig retten könnten. Der Grund dafür besteht darin, daß Flurförderzeuge und ähnliche Fahrzeuge zwischen den Hochregallagern zwangsgeführt sind, d.h. eine Breite haben, die etwa der Gangbreite zwischen den Hochregalen entspricht.

Eine Gefahrenmeldeanlage stellt somit eine Sicherheitsanlage dar, die an dem gefahrbringenden Fahrzeug angebracht wird, so daß eine auftretende Gefahr am Fahrzeug gemeldet werden kann und nicht eine gegebenenfalls große Anzahl von Fluren überwacht werden muß.

Zu diesem Zweck ist der Sensor so am Fahrzeug montiert und in Fahrtrichtung justiert, daß in seinem Erfassungsbereich eine Sicherheitszone vor oder hinter dem Fahrzeug entsteht, wobei dann, wenn die Flurbreite mit einem Sensor nicht abgedeckt werden kann, zwei oder mehrere Sensoren so montiert und justiert sind, daß eine flächendeckende Sicherheitszone insbesondere in Fahrtrichtung des Fahrzeuges vor und/oder hinter dem Fahrzeug entsteht. Derartige Sensoreinrichtungen können auf beiden Fahrtrichtungsseiten des Fahrzeuges vorgesehen sein, um fahrtrichtungsabhängig die Sensoren automatisch zu- oder abzuschalten.

Das Alarmsignal, das der Sensor oder die Sensoren erzeugt oder erzeugen liegt dabei an einem Gefahrenmelder und einer Steuereinrichtung, die zusätzlich mit einem optischen oder akustischen Signalgeber, wie beispielsweise einer Blitzleuchte, einem Summer, einer Hupe usw. ausgestattet sein kann.

Mittels der Gefahrenmeldeanlage kann ein Sicherheitsbereich vor und hinter dem Fahrzeug permanent überwacht werden, solange sich z.B. das Fahrzeug in den engen Fluren aufhält. Die Sensoren und somit der Überwachungsbereich fahren mit dem Fahrzeug mit, so daß der eingentliche Gefahrenbereich pemanent überwacht ist. Wenn dann eine Person in einen Flur eintritt und sich dem Fahrzeug nähert oder sich das Fahrzeug der Person nähert, wird zwangsläufig ein Alarmsignal ausgegeben, das beispielsweise an einer Bremseinrichtung des Fahrzeuges liegen kann, um dieses zwangszubremsen.

Über eine Löschtaste am Fahrzeug können beispielsweise die Bremsen wieder gelöst werden, wenn sich die Person aus dem Gefahrenbereich entfernt hat.

Weiterhin kann eine Taste vorgesehen sein, deren Betätigung es erlaubt, trotz bestehender Gefahr auf Verantwortung des Fahrers z.B. im Kriechgang weiterzufahren, wobei dieser Betriebszustand in der Regel auch bei der Ausfahrt aus einem Flur vorliegt. Die Ausbildung kann weiterhin so sein, daß außerhalb der Flure keine Alarmmeldung erfolgt, was über einen Gang-Erkennungssensor oder -kontakt erreicht wird, der erkennt, daß sich das Fahrzeug im Gang befindet und ein entsprechendes Signal liefert.

Eine derartige berührungslose Flurüberwachung kann nicht nur im Bereich der Fahrzeuge, Geräte oder Vorrichtungen sondern in weiten Bereichen des Materialflusses und der Logistik vorgesehen sein. Die Verwendung einer derartigen Gefahrenmeldeanlage ist preisgünstig, unkompliziert und für den jeweiligen Betrieb meist ohne Einbußen der Effektivität.

Eine der wesentlichen Anforderungen an eine derartige Gefahrenmeldeanlage ist jedoch ihre Zuverlässigkeit. Wenn in der Gefahrenmeldeanlage eine Störung auftritt, beispielsweise ein Sensor ausfällt oder ein Kontakt festsitzt, dann sollte ein Alarmsignal erzeugt und das Fahrzeug automatisch abgebremst werden. Der Fahrer des Fahrzeuges erhält dann zwangsläufig von der vorliegenden Störung Kenntnis.

Die der Erfindung zugrunde liegende Aufgabe besteht darin, die Gefahrenmeldeanlage der eingangs genannten Art so auszubilden, daß alle Leitungen selbstüberwacht sind. Das heißt mit anderen Worten, daß die erfindungsgemäße Gefahrenmeldeanlage so ausgebildet sein soll, daß beim Auftreten einer Störung oder eines Fehlers in der Gefahrenmeldeanlage diese auf einen Zustand schaltet, der einer äußeren, durch den Sensor wahrgenommenen Gefahr entsprechen würde.

Diese Aufgabe wird gemäß der Erfindung durch die Ausbildung gelöst, die im kennzeichnenden Teil des Patentanspruchs 1 angegeben ist.

Der Grundgedanke der erfindungsgemäßen Ausbildung besteht somit darin, alle Ausgangsleitungen zu takten, d.h. mit einem zentralen Taktsignal zu arbeiten, dessen Koinzidenz an den beiden Eingängen der Flip-flop-Schaltung bedeutet, daß die Gefahrenmeldeanlage störungsfrei arbeitet. Bei fehlender Koinzidenz gerät die sonst im Takt der beiden anliegenden Signale pendelnde Flip-Flop-Schaltung außer Takt, so daß sie hängen bleibt und somit ihre Ausgangsimpulskette unterbricht. Dieser Zustand ist gleichbedeutend mit der Unterbrechung des Schaltkreises, in dem der Sensor liegt, so daß dementsprechend ein Alarmsignal erzeugt wird.

Da dieses Taktsignal an allen Leitungen und Bauteilen der erfindungsgemäßen Gefahrenmeldeanlage liegt, bevor es zusammen mit dem direkten oder internen Taktsignal an der Flip-flop-Schaltung liegt, ist eine Selbstüberwachung sämtlicher Funktionen der erfindungsgemäßen Gefahrenmeldeanlage möglich.

Besonders bevorzugte Ausgestaltungen und Weiterbildungen der erfindungsgemäßen Gefahrenmeldeanlage sind Gegenstand der Patentansprüche 2-6.

Im folgenden wird anhand der zugehörigen Zeichnung ein besonders bevorzugtes Ausführungsbeispiel der Erfindung näher beschrieben. Es zeigen

Figur 1 eine Seitenansicht sowie zwei Draufsichten eines Flurförderzeuges mit den überwachten Gefahrenbereichen,

Figur 2 das Grundschaltbild des Ausführungsbeispiels der erfindungsgemäßen Gefahrenmeldeanlage,

Figur 3 in einem Zeitdiagramm die Signalwellenform der Signale, die in der Schaltung des Ausführungsbeispiels der erfindungsgemäßen Gefahrenmeldeanlage auftreten, und

Figur 4 das Schaltbild des Ausführungsbeispiels der erfindungsgemäßen Gefahrenmeldeanlage mehr im einzelnen.

In Figur 1 ist ein Flurförderzeug, beispielsweise ein Gabelstapler 1 dargestellt, der mit einem Ausführungsbeispiel der erfindungsgemäßen Gefahrenmeldeanlage versehen ist und somit wenigstens einen Sensor 2 aufweist, der in einer bestimmten Weise so ausgerichtet ist, daß definierte Bereiche vor und hinter dem Flurförderzeug 1 überwacht werden.

Der Sensor kann beispielsweise ein Infrarotsensor sein, der die von einem Körper ausgesandten Wärmestrahlen im Infrarotbereich wahrnimmt. Betritt z.B. eine Person den überwachten Bereich, so wird sich aufgrund der von ihr ausgehenden Wärmestrahlung das in diesem Bereich bereits vorhandene Temperaturfeld ändern. Diese Änderung kann über den Infrarotsensor erfaßt und in ein Alarmsignal umgewandelt werden.

Die Gefahrenmeldeanlage besteht aus einer zentralen Steuereinheit und je nach Flurbreite oder Notwendigkeit einer überlappenden Überwachung der Gefahrenzone, beispielsweise vier oder sechs Infrarotsensoren mit Konsolen und Zubehör. Die einzelnen Sensoren sind räumlich am Fahrzeug so angeordnet, daß Personen in einem Regalflur hinter und vor dem Fahrzeug rechtzeitig erkannt werden und das Fahrzeug durch automatische Abbremsung rechtzeitig angehalten wird. Die Reichweite der geforderten Sicherheitszone beträgt in der Regel sechs bis acht Meter vor und hinter dem Fahrzeug, beispielsweise dem Gabelstapler, wobei die Sicherheitszone auf das zwei- bis dreifache des Bremsweges eingestellt sein sollte.

Wie es in Figur 1 dargestellt ist, können die Sensoren parallel oder diagonal eingestellt sein, so daß sich in der Draufsicht Überwachungszonen ergeben, die in Figur 1 schraffiert dargestellt sind.

Die Gefahrenmeldeanlage kann weiterhin mit einer Einrichtung zur Gangerkennung versehen sein, die so ausgebildet ist, daß das Weiterleiten des Alarmsignals zum Abschalten des Motorstromes bzw. für eine automatische Abbremsung erst dann erfolgt, wenn über die Gangerkennung erkannt wird, daß das Flurförderzeug einen Gang, beispielsweise zwischen zwei Hochregalen, erreicht hat.

Die Sensoren sind dabei so montiert, daß ein Gefahrenbereich vor und hinter dem Flurförderzeug, mindestens 6-8 Meter reicht, in der gesamten Flurbreite, und zwar unabhängig von der Fahrtrichtung, der Höhenstellung, der Gabel eines Gabelstaplers, der Fahrt, der Diagonalfahrt oder des Stillstandes permanent überwacht wird.

Die justierten Sensoren ermöglichen den Aufbau einer unsichtbaren Sicherheitszone, so daß dann, wenn diese Sicherheitszone von einer Person berührt wird, das Fahrzeug automatisch angehalten werden kann, wobei z.B. eine Blitzlichtlampe oder Hupe dem Fahrer den Alarm zusätzlich signalisieren kann.

Nach Verlassen des Flures wird eine Alarmauslösung über die Gangerkennung am Flurförderzeug unterbrochen. Außerhalb der Flure, wo eine Ausweichmöglichkeit für Personen wieder gegeben ist, erfolgt daher keine Weiterleitung des Alarmsignals.

Innerhalb des Flurbereiches kann bei einem Alarmfall eine Motor-Strom-Unterbrechung bzw. eine automatische Anbremsung des Flurförderzeuges bewirkt werden. Durch Betätigen einer Quittiertaste, die ein Lösen der Bremse bewirkt, wird vom Fahrer bestätigt, daß er die vorhandene Störung erkannt hat und diese beseitigt wurde. Das Fahrzeug kann dann wieder weiterfahren. Solange die Störung im Gefahrenbereich nicht beseitigt oder entfernt ist, läßt sich jedoch die Bremse über die Quittiertaste nicht lösen.

Soll die Fahrt trotz einer Alarmmeldung bewußt fortgeführt werden, so kann dies nach vorangegangener Abbremsung über eine Sondertaste in Zweihandbetätigung erfolgen. Die optische Warnsignalgebung, z.B.

am Tableau über eine Blinkdiode oder über eine Blinklampe am Fahrzeug, bleibt in diesem Fall erhalten.

Beim Abziehen des Flurförderzeugschlüssels am Zündschloß wird die Gefahrenmeldeanlage nicht ausgeschaltet. Eine Abschaltung erfolgt erst bei Betätigung einer Nottaste, damit die Gefahrenmeldeanlage permanent einsatzbereit bleibt.

Folgende Funktionen zwischen der Gefahrenmeldeanlage und dem Steuersystem des Fahrzeuges, beispielsweise des Flurförderzeuges können z.B. am Flurförderzeug verknüpft werden:

1. Signal über den Zustand der Gangerkennung,
2. Signal über den Zustand des Kriechganges,
3. Elektrische oder elektrohydraulische Bremse bzw. Gegenstrombremse
4. Quittierfunktion.

Als Sensoren für die Überwachung der Gefahrenbereiche können z.B. Sensoren auf Infrarotbasis, Ultraschallbasis oder Mikrowellenbasis eingesetzt werden. Infrarotsensoren kommen insbesondere dann in Frage, wenn eine geradlinige Erfassung des Umfeldes gewollt ist und Verpackungsgegenstände (Papier- und Folienreste), die auf dem Boden liegen oder aus dem Regal herausragen, die Überwachung nicht stören sollen .

Die Sensoren können an einer Konsole derart montiert sein, daß eine Justierung der Sensoren möglich ist, und nach der Justierung die Sensoren verdrehsicher fixiert werden können. Dabei kann jeder Sensor im Bereich eines Fensters mittels einer Blende in seinem Erfassungsbereich unterschiedlich eingeschränkt werden, wobei sich die Blende mit einer Schraubverbindung oder einer Preßverbindung arretieren läßt. Das Meldefenster kann mit einer Verschiebeeinrichtung versehen sein, die eine Fensterverkleinerung oder -vergrößerung ermöglicht. Die Ausbildung kann dabei derart sein, daß der Bereich der Gefahrenzonen bis auf eine Entfernung von ca. 25 Meter eingestellt werden kann und durch eine Schrägstellung der Sensoren die Länge bzw. durch eine Drehung der Sensoren die Breite der überwachten Abschnitte eingestellt werden kann.

Anhand des in Figur 2 dargestellten Grundschaltbildes wird im folgenden der Aufbau des Ausführungsbeispiels der erfindungsgemäßen Gefahrenmeldeanlage weiter im einzelnen beschrieben.

In Figur 2 sind Kontakte R, K, G und M dargestellt, die jeweils für die Gangerkennung G, den Sensor oder Melder M, die Rücksetztaste R und für die Gangerkennung K stehen. In Abhängigkeit von den jeweils relevanten Zustandkombinationen der Variablen G, M, R und K wird am Relaiskontakt PK ein Ausgangssignal erzeugt, das zu einem Anhalten des Fahrzeuges, zu einer freien Fahrt des Fahrzeuges oder zu einer zeitverzögerten Weiterfahrt, z.B. einer Kriechfahrt führt.

In der folgenden Tabelle sind die verschiedenen Zustandskombinationen mit den sich daraus ergebenden Zuständen des Signals PK dargestellt. Dabei haben die Zustandsvariablen die folgenden Zustände:

$G/\overline{G}$ - Gangerkennung / keine Gangerkennung
$M/\overline{M}$ - Meldealarm / keine Meldealarm
$R/\overline{R}$ - Rücksetzen betätigt / nicht betätigt
$K/\overline{K}$ - Kriechgang betätigt / nicht betätigt
$PK/\overline{PK}$ - Kontakt geschlossen / offen

| ABFOLGE | "G" | "M" | "R" | "K" | " PK" | "BEMERKKUNG" |
|---|---|---|---|---|---|---|
| I. | $\underline{G}$ | * | * | * | PK | freie Fahrt |
| II. | G | $\underline{M}$ | * | * | PK | freie Fahrt |
| III. | G | M | $\underline{R}$ | $\underline{K}$ | $\underline{PK}$ | Stop |
| IV. [1] | G | M | R | $\underline{K}$ | $\underline{PK}$ | Stop |
| V. [2] | G | M | R | K | $\underline{PK}$ | Stop |
| VI. [3] | G | M | $\underline{R}$ | K | Z-->PK | zeitverzögerte Kriechfahrt |
| VII.a[4] | G | $\underline{M}$ | $\underline{R}$ | $\underline{K}$ | $\underline{PK}$ | freie Fahrt nach Beendigung der Kriechfahrt |
| VII.b | G | $\underline{M}$ | R | $\underline{K}$ | PK | freie Fahrt durch Löschen der Selbsthaltung |
| VIII[5] | G | $\underline{M}$ | * | K | PK | freie Kriechfahrt |
| IX. | G | M | $\underline{R}$ | K | $\underline{PK}$ | -->Z-->PK zeit-unterbrochene Kriechfahrt |
| X. | $\underline{G}$ | M | R | $\underline{K}$ | PK | freie Fahrt |

Fußnoten:

1) solange "M" = M kein "Reset" möglich

2) "R" = R blockiert verzögertes Kriechgangfahren

3) Nach Zeitverzögerung Z Kriechgang möglich, Z wird nach jedem Betätigen von "K" = K neu gesetzt.

4) Nach Beendigung einer zwangsweisen Kriechfahrt wird automatisch ein "Reset" versucht, d.h. es kann ohne Betätigung der Resettaste in freie Fahrt übergegangen werden, falls der Alarm nicht mehr gültig ist.

5) Während freiwilliger Kriechfahrt ("M" = $\underline{M}$) führt ein Auftreten eines Alarmes ("M" --> M) zum Abfall des Relais; wird jedoch nach Ablauf der Verzögerzung zwangsweise Kriechgang gefahren, werden keine weiteren Alarmmeldungen wirksam (s. III. - IV.)

Bei der erfindungsgemäßen Gefahrenmeldeanlage soll ein beliebiger Fehler in der Steuerung in jedem Fall für die Bedienungsperson erkennbar sein, d.h. wenigstens dazu führen, daß der Zustand des potentialfreien Kontaktes "PK" im Bedarfsfall bei vorhandener Gangerkennung mit dem Zustand der Zustandsvariablen M korreliert.

Dabei sollen die Signalleitungen M und G gegen eine Unterbrechung einen Kurzschluß zur positiven bzw. negativen Seite und gegenüber der Versorgungsspannung überwacht werden und sollen die Steuerleitungen R und K in dem Sinne überwacht werden, daß ein beliebiger Defekt bezüglich R und K nicht zum ständigen Anziehen des Relais mit dem Kontakt PK führt.

Das Relais wird gegenüber einem Kleben des Kontaktes PK, einem Kleben des Ankers und einem Nichtabfallen des Relais wegen eines Ansteuerdefektes überwacht.

Weiterhin dürfen Defekte in der elektronischen Schaltung nicht zu einem ständigen Anziehen des Relais führen.

Diese Förderungen werden im wesentlichen durch eine dynamische Ansteuerung des Relais (hohes Stromrelais, d.h. sicherer Zustand = stromloser Zustand) in Verbindung mit einer bestimmten Relaiskonstruktion mit gekoppelten Alarm- und Sicherheitskontakten sowie der Erzeugung der zur Ansteuerung des Relais nötigen Wechselspannung durch Rückkoppelung über den Melde- bzw. Gangerkennungskreis M bzw. G erfüllt.

Das Grundschaltbild ist in Figur 2 dargestellt. Der in Figur 2 dargestellte Zustand ist (PK, $\underline{M}$, $\underline{G}$, $\underline{R}$, $\underline{K}$).

Ein quartzstabilisierter Taktgenerator 3 (32, 768 kHz Quartz) erzeugt unter anderem Impuls- oder Taktsignale mit Frequenzen von 2 kHz, 1 kHz und 4 Hz.

Mit der 2 kHz - Frequenz wird eine als bistabiles Kippglied oder Toggle-Flip-Flop geschaltete Flip-Flop-Schaltung 6 getaktet, deren Ausgang Q über einen Treibertransistor T die Leitungen zu den Meldekontakten M, dem Gangerkennungskontakt G sowie dem Kriechgangkontakt K ansteuert.

Die Rückführungen von den genannten Kontakten liegen über einen elektronischen Umschalter U am Dateneingang D der Flip-Flop-Schaltung 6, so daß dieses in den Toggle-Zustand (Pendeln mit einer Frequenz von 1 kHz) gerät, falls die entsprechenden Leitungen keinen Defekt aufweisen und die dazugehörigen Kontakte geschlossen sind. Das auf diese Weise erzeugte 1 kHz Toggle-Signal steuert direkt einen elektrischen Polaritätsumschalter EPU, dessen erzeugte Rechteck-Wechselspannung kapazitiv einen Brükkengleichrichter B ansteuert, über den das gepolte Sicherheitsrelais betrieben wird.

Bei einer Unterbrechung der Leitung Gangerkennung G werden die Signale des Melders oder Sensors über das Nand-Glied NA 1 wirksam, obwohl das Fahrzeug sich nicht innerhalb eines Ganges befindet. Analog dazu führt eine Unterbrechung der Melderleitung M zum Daueralarm, wenn der Gangerkennungskontakt G bei Gangerkennung offen ist.

Durch das oben beschriebene Grundprinzip ist immer gewährleistet, daß das Relais nur anziehen kann, wenn die Rückkoppelung über eine der Signalleitungen intakt ist, insbesondere die ansteuernde Flip-Flop-Schaltung intakt ist.

Das 1 kHz Toggle-Signal wird der Steuerlogik 5 zugeführt, die ihrerseits mit einer Frequenz von 1 kHz vom Taktgenerator das Toggle-Signal auf die Synchronizität des Steuerungsablaufes überprüft.

Im Alarmfall erzeugt die Logik ein Selbsthaltesignal, das den Umschalter U in die mittlere Position II bringt.

Bei einem längeren Alarm, d.h. wenn die Rücksetz- oder Resettaste R unwirksam ist, kann durch Schließen des Kriechgangkontaktes K die Logik 5 veranlaßt werden, nach einer einstellbaren Verzögerung Z (0-3,75 s) den Umschalter U in die Position III zu bringen, so daß über die geschlossene Kriechganglinie wieder ein Toggle-Zustand erreicht wird.

Die Zeitverzögerung Z wird nach jeder Unterbrechung der K-Linie gestartet.

Wird während des Alarms M der Rücksetzkontakt R betätigt, so bleibt K unwirksam.

Eine Betätigung von R setzt den Umschalter U in die Position I. Sind in diesem Moment die Meldeleitung M oder die Gangerkennungsleitung G oder beide geschlossen, so wird durch den auftretenden Toggle-Zustand (U bleibt von selbst in der Position I) die Selbsthaltung aufgehoben.

Die beiden außenliegenden Arbeitskontakte (13, 14) und (19, 20) des Relais 4 sind in Reihe geschaltet und liefern die Schnittstelle zum Fahrzeug (potentialfreier Kontakt). Die ihnen zugeordneten zwangsgeführten innenliegenden Kontakte (5, 6) und (11, 12) sind ebenfalls in Reihe geschaltet, über sie wird eine Massesignal geführt, das zum Rücksetzen der Selbsthaltung dient.

Ist einer der Kontakte (13, 14) oder (19,20) verschweißt, so ist kein Rücksetzen mehr möglich und kann das Fahrzeug durch Betätigen von K nur noch im Kriechgang fahren.

Bleibt der Anker des Relais 4 kleben, so öffnet der innen liegende Kontakt (7, 8) nicht und ertönt in einem entsprechend zugeschalteten Summer ein Warnsignal. Dieser Summer wird über die ihn steuernden innenliegenden Arbeitskontakte (7, 8) parallel zu den Kontakten (9, 10) bei jedem Aktivieren des Kriechgangbetriebes (eine Sekunde lang) geprüft.

Die Steuerlogik 5 wird bezüglich der Selbsthaltung bei jedem erstmaligen Einschalten der Betriebsspannung insofern geprüft, als die Steuerung in die Selbsthaltung (Alarm) unabhängig vom Zustand G gezwungen wird.

Sollte der Betriebszustand PK ohne Betätigung von R erfolgen, ist die Steuerung als defekt zu betrachten. Gleiches gilt natürlich auch während des Betriebszustandes G.

Für den Fall eines Steuerungsdefektes, bei dem das Relais nicht mehr anziehen kann, wird dem Anwender eine UND-Verknüpfung von einem zusätzlichen K-Kontakt , R-Kontakt sowie dem Defektkontakt (15, 16) DEFK empfohlen.

Durch diese Schaltungsmaßnahme ist es möglich, bei obigem Defekt durch gleichzeitiges Betätigen von K und R wenigstens im Kriechgang zu fahren.

Das vollständige Schaltbild ist in Figur 4 dargestellt, wobei in Figur 4 zum leichteren Überschauen der Funktionen die Signalverläufe nach ihrer Funktion unterschiedlich hervorgehoben sind. Zur Verdeutlichung des zeitlichen Ablaufs dient das Zeit-Logik-Diagramm von Figur 3, in dem die Signalwellenformen der an den verschiedenen Punkten der Schaltung auftretenden Signale in Abhängigkeit von der Zeit dargestellt sind.

Der in Figur 4 dargestellte Oszillator OSC erzeugt die Taktsignale, die auf ihren Pfaden gestrichelt gekennzeichnet sind. Der Toggle-Pfad über die Signalleitungen und die elektronische Schaltung ist mit starken Linien durchgezeichnet. Die Selbsthalte- bzw. Rücksetzsignalpfade sind punktiert. Die Kriechgangfunktion ist durch Pfeile markiert. Die nicht hervorgehobenen Signalleitungen dienen im wesentlichen für Anzeigefunktionen.

In Figur 4 sind im einzelnen der elektronische Umschalter U in Form von NAND-Gliedern NA1, NA2, NA4, NA5 dargestellt. Die Stromversorgung ist als Bauteil 7 bezeichnet. Die Einstellung der Zeitverzögerung für die Kriechgangfahrten erfolgt über den Zähler 8 mit den logischen Verknüpfungsgliedern NA9, NO3 und dem Flip-Flop F3. Die Selbsthaltung erfolgt über das Flip-Flop F2 und die Verknüpfungsglieder NO2, NA3, NA7.

In Figur 3 sind die einzelnen Signale an verschiedenen Punkten der in Figur 4 dargestellten Schaltung gezeigt. Dabei stellen die Zeilen I - III die Taktsignale für die Flip-Flop-Schaltungen F1 bis F3 dar, zeigen die Zeilen IV - VIII die zu überwachenden Signalleitungen und die zu bedienenden Steuerleitungen am Eingang der Steuerung und sind auf den Zeilen IX - XIII die wichtigen Logiksignale (Reaktion) der Steuerung dargestellt.

Wie es im obigen beschrieben wurde, sind somit alle Ausgangsleitungen der Gefahrenmeldeanlage getaktet, wozu der Taktgeber 3 vorgesehen ist, der beispielsweise ein Taktsignal mit einer Frequenz von 2 kHz erzeugt. Diese Taktsignal liegt als interner Takt an der Flip-Flop-Schaltung 6 (Figur 2) oder F1 (Figur 4). Das am Ausgang Q auftretende Taktsignal mit einer Frequenz von 1kHz liegt über einen Verteiler 9 an den Sensoren und Meldekontakten. An diesen Kontakten wird ein Kontaktsignal überlagert, so daß Takt- und Kontaktsignal am anderen Eingang D der Flip-Flop-Schaltung 6 bzw. F1 liegen. Die Flip-Flop-Schaltung 6 bzw. F1 spricht auf die Koinzidenz der beiden Taktsignale an, so daß bei fehlender Koinzidenz die Flip-Flop-Schaltung sperrt und keinen Takt für die Steuerung liefert. Das dann erzeugte Ausgangssignal der Flip-Flop-Schaltung F1 oder 6 wird über Operationsverstärker 10 in Figur 4 verstärkt, wobei das verstärkte Signal an einem Gleichrichter 11 liegt, dessen Ausgangssignal das Alarmsignal bildet, über das der Zustand des Hauptrelais 12 gesteuert wird, das mit den bereits erwähneten Sicherheits- und Alarmkontakten versehen ist. Das heißt, daß ein an den Verstärkern 10 und dem Gleichrichter 11 liegendes Impulssignal vom Flip-Flop F1 zu einem Signal verarbeitet wird, das den gefahrlosen und fehlerfreien Zustand der Gefahrenmeldeanlage angibt, während das Fehlen dieses Signals, d.h. das Fehlen eines Impulssignals vom Flip-Flop F1 als Alarmzustand angesehen wird, so daß der Alarmzustand des Alarmsignals durch das Fehlen eines Ausgangssignals am Gleichrichter 11 gekennzeichnet ist. Die miteinander gekoppelten Sicherheits- und Alarmkontakte sind zwangsgeführt und überwachen die Arbeit des Relais. Der Sicherheitskontakt liegt am Rücksetz- oder Reset-Kontakt R.

Die in Figur 4 schematisch mit M bezeichneten Sensoren können eine variable Empfindlichkeit durch eine entsprechende Wahl der Verstärkungsfaktoren der Operationsverstärker 10 bekommen. Das Signal der Sensoren hat beispielsweise ein Potential von 5 Volt, wobei das überlagerte Taktsignal des Taktgebers 3 zu einem impulsförmigen Spannungsabfall bei Überlagerung führt, der bei etwa 3 Volt liegen kann.

## Patentansprüche

1. Gefahrenmeldeanlage für ein Fahrzeug, insbesondere ein Flurförderzeug (1) mit wenigstens einem Sensor (2, M), der das Auftauchen eines Gegenstandes oder einer Person in einem bestimmten Bereich erfaßt und ein entsprechendes Alarmsignal erzeugt, das an Schalt-Steuereinrichtungen (PK) für den Betrieb des Fahrzeuges (1) oder Alarmeinrichtungen für den Fahrer des Fahrzeuges (1) liegt, gekennzeichnet durch einen Taktgenerator (3), der ein fortlaufendes Impulssignal erzeugt, das an einem Eingang einer als bistabiles Kippglied geschalteten Flip-Flop-Schaltung (6, F1) und über einen Rückkopplungskreis vom Ausgang der Flip-Flop-Schaltung (6, F1) über den Sensor (2, M) am anderen Eingang der Flip-Flop-Schaltung liegt, wobei die Flip-Flop-Schaltung (6, F1) nur bei Signalkoinzidenz ein Ausgangssignal in Form einer Impulskette erzeugt und daß das bei Fehlen der Signalkoinzidenz erzeugte Ausgangssignal der Flip-Flop-Schaltung (6, F1) zum Alarmsignal verstärkt und gleichgerichtet wird.

2. Gefahrenmeldeanlage nach Anspruch 1, dadurch **gekennzeichnet,** daß zwischen dem Ausgang des Sensors (M) und der Flip-Flop-Schaltung (6) eine logische Verknüpfungsschaltung (5) vorgesehen ist, die Signale anderer Sensoren und Schalter für weitere Betriebszustände mit dem Sensorsignal logisch verknüpft.

3. Gefahrenmeldeanlage nach Anspruch 1 oder 2, **gekennzeichnet** durch einen Zähler (8), an dem das Impulssignal des Taktgebers (3) liegt, und der bei Erreichen eines bestimmten Zählerstandes ein Signal abgibt, das an der logischen Verknüpfungsschaltung (5) liegt.

4. Gefahrenmeldeanlage nach Anspruch 3, dadurch **gekennzeichnet,** daß der Zähler (8) voreinstellbar ist.

5. Gefahrenmeldeanlage nach einem der vorhergehenden Ansprüche, dadurch **gekennzeichnet,** daß das Alarmsignal an einem Hauptschaltrelais (12) liegt, dessen Alarmkontakt mit den Schalteinrichtungen für die Steuerung der Arbeitsweise des Fahrzeuges verbunden ist.

6. Gefahrenmeldeanlage nach Anspruch 5, dadurch **gekennzeichnet,** daß das Hauptschaltrelais (12) einen Sicherheitskontakt aufweist, der mit dem Alarmkontakt gekoppelt ist und öffnet oder schließt, wenn der Alarmkontakt schließt oder öffnet.

## Claims

1. Danger alarm system for a vehicle, in particular an industrial truck (1) with at least one sensor (2,M) which detects the appearance of an object or a person in a certain region and produces a corresponding alarm signal, which lies at switch-control devices (PK) for the operation of the vehicle (1) or alarm devices for the driver of the vehicle (1), characterised by a clock pulse generator (3), which produces a continuous pulse signal, which lies at one input of a flip-flop circuit (6, F1) connected as bistable element and, by way of a feedback circuit from the output of the flip-flop circuit (6, F1) by way of the sensor (2,M) at the other input of the flip-flop circuit, wherein the flip-flop circuit (6,F1) only produces an output signal in the form of a pulse sequence when there is signal coincidence and in that the output signal of the flip-flop circuit (6,F1) produced when there is no signal coincidence is amplified to an alarm signal and rectified.

2. Danger alarm system according to claim 1, characterised in that between the output of the sensor (M) and the flip-flop circuit (6) there is provided a logic circuit (5) which links signals of other sensors and switches for further operating states with the sensor signal, using logic.

3. Danger alarm system according to claim 1 or 2, characterised by a counter (8) at which the pulse signal of the clock generator (3) lies, and which delivers a signal when a fixed counter state is reached, said signal lying at the logic circuit (5).

4. Danger alarm system, according to claim 3, characterised in that the counter (8) is able to be preset.

5. Danger alarm system according to one of the preceding claims characterised in that the alarm signal lies at a main switch relay (12), the alarm contact of which is connected to the switch devices for the control of the functioning of the vehicle.

6. Danger alarm system according to claim 5, characterised in that the main switch relay (12) has a safety contact, which is coupled to the alarm contact and opens or closes when the alarm contact closes or opens.

## Revendications

1. Installation de signalisation de danger pour un véhicule, notamment un chariot de manutention (1), comportant au moins un capteur (2, M), qui détecte l'arrivée d'un objet ou d'une personne dans une zone déterminée et produit un signal d'alarme correspondant, qui est appliqué à des dispositifs de commande de commutation (PK) pour le fonctionnement du véhicule (1) ou à des dispositifs d'alarme pour le conducteur du véhicule (1), caractérisée par un générateur de cadence (3), qui produit un signal impulsionnel permanent, qui est appliqué à une entrée d'un circuit à bascule (6, F1), branché en tant que circuit à bascule bistable, et par l'intermédiaire d'un circuit de réaction à partir de la sortie du circuit à bascule (6, F1), par l'intermédiaire du capteur (2, M), à l'autre entrée du circuit à bascule , le circuit à bascule (6, F1) produisant un signal de sortie sous la forme d'une suite d'impulsions uniquement dans le cas d'une coïncidence des signaux et en ce que le signal de sortie du circuit à bascule (6, F1), qui est produit lorsqu'il n'y a pas coïncidence des signaux, est amplifié et redressé pour former le signal d'alarme.

**2.** Installation de signalisation de danger selon la revendication 1, caractérisée en ce qu'entre la sortie du capteur (M) et le circuit à bascule (6) est prévu un circuit logique combinatoire (5), qui combine logiquement le signal du capteur à des signaux d'autres capteurs et interrupteurs pour d'autres états de fonctionnement.

**3.** Installation de signalisation de danger selon la revendication 1 ou 2, caractérisée par un compteur (8), auquel est appliqué le signal impulsionnel du générateur de cadence (3) et qui, lorsqu'un état de comptage déterminé est atteint, délivre un signal, qui est appliqué au circuit logique combinatoire (5).

**4.** Installation de signalisation de danger selon la revendication 3, caractérisée en ce que le compteur (8) est préréglable.

**5.** Installation de signalisation de danger selon l'une des revendications précédentes, caractérisée en ce que le signal d'alarme est appliqué à un relais de commutation principal (12), dont le contact d'alarme est relié aux dispositifs de commutation pour la commande du mode de fonctionnement du véhicule.

**6.** Installation de signaiisation de danger selon la revendication 5, caractérisée en ce que le relais de commutation principal (12) possède un contact de sécurité, qui est couplé au contact d'alarme et s'ouvre et se ferme lorsque le contact d'alarme se ferme ou s'ouvre.

Fig. 1

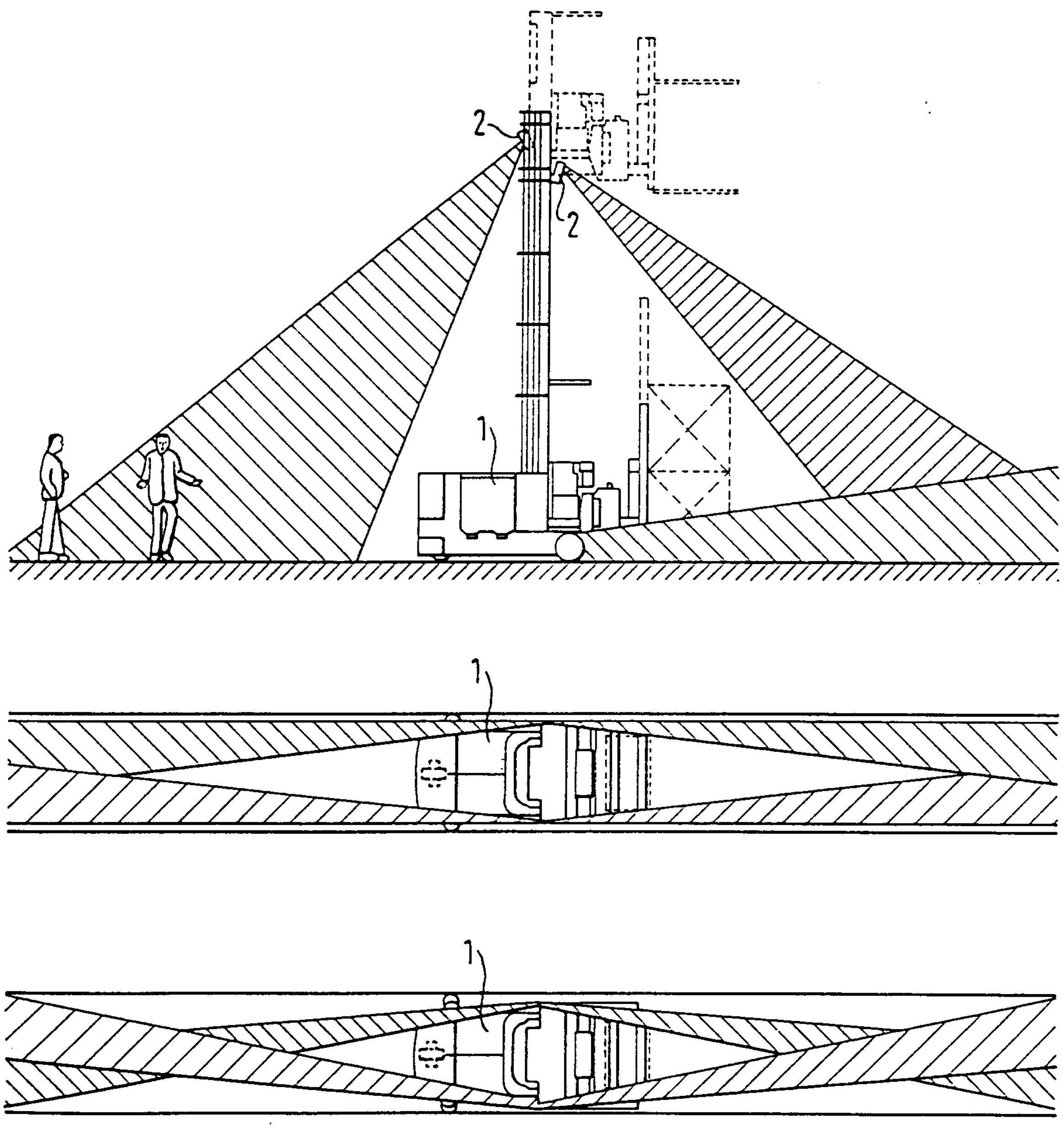

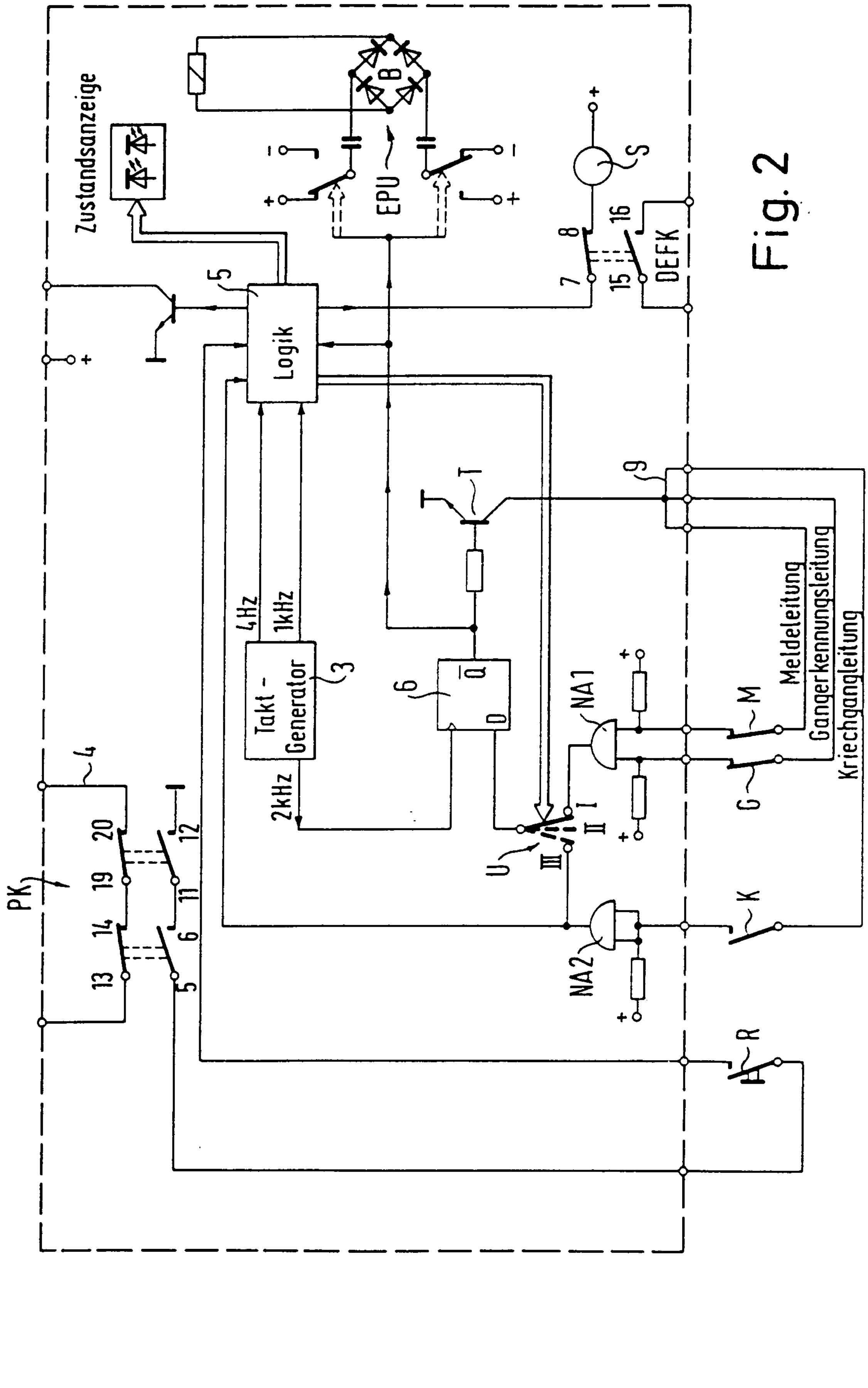
Zustandsanzeige
B
EPU
J
+
−
S
7
8
15
16
DEFK
5
Logik
4Hz
1kHz
2kHz
Takt-Generator
3
6
Q̄
D
T
9
Meldeleitung
Gangerkennungsleitung
Kriechgangleitung
NA1
NA2
M
G
K
R
U
I
II
III
PK
4
13
14
19
20
5
6
11
12

Fig. 2

Fig. 3

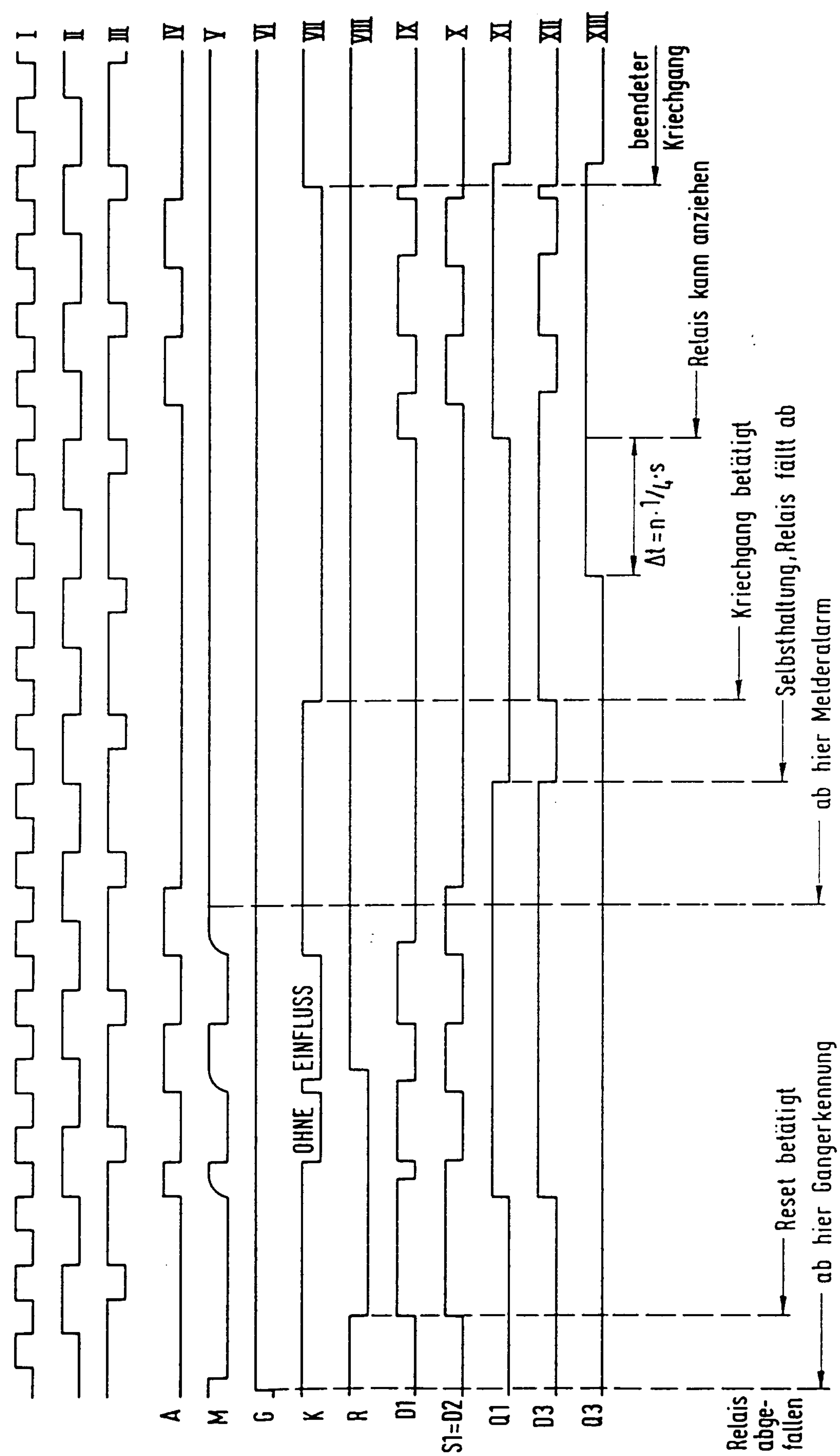

I
II
III
IV
V
VI
VII
VIII
IX
X
XI
XII
XIII
A
M
G
K
R
D1
S1=D2
Q1
D3
Q3
OHNE EINFLUSS
Relais abge-fallen
ab hier Gangerkennung
Reset betätigt
ab hier Melderalarm
Selbsthaltung, Relais fällt ab
Kriechgang betätigt
Δt = n · 1/4 · s
Relais kann anziehen
beendeter Kriechgang

Fig. 4

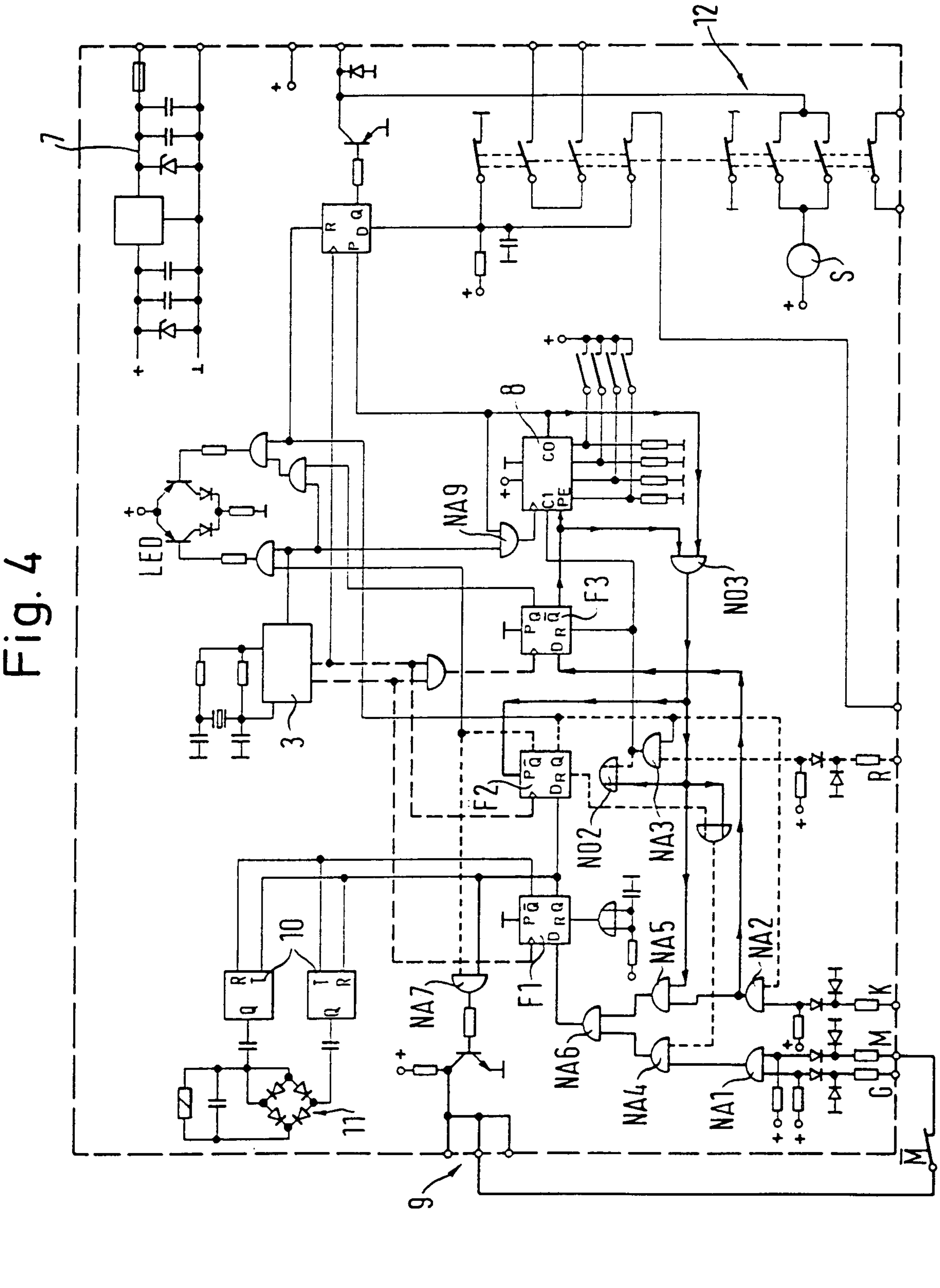
7
12
S
8
LED
NA9
NO3
F3
3
F2
NO2
NA3
10
F1
NA7
NA5
NA2
NA6
NA4
NA1
11
9
R
K
M
G
M̄